# NEW EUROPEAN PATENT SPECIFICATION

(11) **EP 0 601 659 B2**
(45) Date of publication and mention of the opposition decision: **04.09.2002**
(45) Mention of the grant of the patent: 07.02.1996
(21) Application number: 93203406.9
(22) Date of filing: 06.12.1993
(51) Int. Cl.: G07F 7/10, G07C 9/00, G06F 1/00

(54) **Method for protecting a smart card system**
Verfahren zum Schützen eines Chipkartensystems
Méthode pour la protection d'un système à carte à circuit intégré

(30) Priority: 07.12.1992 NL 9202113
(43) Date of publication of application: 15.06.1994
(73) Proprietor: Koninklijke KPN N.V., 9726 AE Groningen (NL)
(72) Inventor: Appeldorn, Menzo, NL-9563 PJ Ter Apelkanaal (NL)

(56) References cited:
- EP-A- 0 117 124
- FR-A- 2 513 408
- GB-A- 2 070 306
- US-A- 4 211 919
- EUROPEAN STANDARD, draft prEN 726-3, March 1992, pages 1-19.

## Description

### BACKGROUND OF THE INVENTION

The invention relates to a method for protecting a smart card system comprising a smart card and a terminal for connecting up said smart card to a processing system via a transmission medium, in which method, to activate the smart card, a smart card user has to key in an identification code which is compared by the smart card with an identification code stored in said smart card and in which method the smart card is activated if there is agreement between the two said identification codes.

US-A-4 211 919 discloses a smart card which is invalidated when attempt is made to gain access to the card using an incorrect key a certain number of times.

European Standard, draft prEN 726-3, March 1992, pages 1 to 19 defines a smart-card system according to which an error code is supplied by the smart-card to the terminal after a number of unsuccessful attempts to enter a PIN.

GB-A-2 070 306 relates to a transaction processing system in which a terminal comprises means for detaining an offender at the transaction machine through a delay instruction without letting him notice and escape.

### SUMMARY OF THE INVENTION

The object of the invention is to provide a better protection for smart card systems. The invention is based on the consideration that, if smart cards wish to be accepted by the public at large for the storage of (often personal) data, the probability that dishonest users who try to make use of smart cards which have been found or stolen will be arrested, has to be high. According to the invention, measures are therefore provided whereby dishonest use is detected without the dishonest user noticing it.

According to the invention, a method is provided for protecting a smart card system which comprises a smart card and a terminal for connecting said smart card to a processing system via a transmission medium, in which method, to activate the smart card, a smart card user has to key in an identification code which is compared by the smart card with an identification code stored in said smart card and in which method the smart card is activated if there is agreement between the two said identification codes, in which method, after an identification code which differs from the identification code stored in the smart card has been keyed in a certain number of times, the smart card is nevertheless activated to a limited extent pretending that a start has been made on setting up a session by means of a message which suggests that the user is connected to the processing system, the message being generated by the smart card and, under these circumstances, an error code is supplied by the smart card to the terminal. As soon as a dishonest user (who is deemed not to know the identification code (the 'password') tries to make use of the smart card which does not belong to him, therefore, he will do this by keying in consecutively identification codes, one of which he hopes or assumes could in fact be the required code (that is to say, identical to the code as stored in the smart card itself). According to the invention, the smart card, as it were, pretends that after an incorrect identification code has been keyed in a number of times, the dishonest user has, at a certain instant, found the correct code and consequently activated the smart card, as a result of which access to the underlying processing system is obtained. The reality is that the smart card provides only a limited access (which the dishonest user does not notice) and at the same time supplies an error code.

The error code generated can be processed in various ways. Thus, it is possible that said error code causes an alarm signal to be initiated by the smart card itself (which must therefore have a 'beep' facility for this purpose) or by the terminal. In the latter case, a noticeably stronger alarm signal is generally initiated. Preferably, however, the error code is transmitted by the smart card as an alarm code (via the terminal) to the processing system. A large number of terminals will generally be connected to such a processing system. In that case, the terminal will preferably also send a code which gives an indication of the location of the terminal; said indication may simply be a terminal number (the location of every terminal number being assumed to be known) or an actual location indication.

### EXEMPLARY EMBODIMENTS

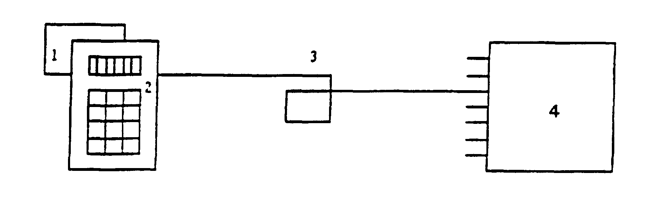

Figure 1 shows a smart card 1 which can be connected up to a terminal 2. Said contact may be wireless or electrical. Like a PC, the smart card 1 comprises a processor and memory space and is controlled by control software stored in the memory space. The terminal 2 also comprises a processor and memory space and is also controlled by control software. The terminal 2 is connected by means of a transmission medium 3 (for example part of a network) to a processing system 4, for example a database system for calling up, mutating and presenting information, or a transaction system for performing financial transactions. The system 4 may also be an access-monitoring system, in which access can be obtained to, for example, a building, a room or a vehicle with the aid of a smart card. The system 4 may also be a component of a telephone exchange and the smart card can be used to acquire access to the exchange or to certain services and to bill call costs or other costs Hereinafter, the last example is assumed; the terminal 2 is in that case also provided with a telephone receiver and a keyboard which can be used for keying in either the identification code or the telephone number. Before a user can make contact with the system 4, he has to identify himself in relation to 'his' smart card. This makes it possible to prevent smart cards which have been found or stolen being used without difficulty.

The ability to 'empty' a 'telephone card', as in this example, is not such a great problem. However, the use of smart cards is expected not to remain limited to the payment of telephone costs and the like but said cards will also start to play a greater role in banking transactions and in the exchange of (personal, for example medical) information. As a consequence of this, such smart cards will therefore be able to contain important information and, in order for it to be possible to introduce such cards successfully to the public at large, it is of great importance that action can be taken rapidly and effectively against misuse.

If the card 1 is used by its own user, the latter will be able to acquire access to the system 4 by keying in his identification code on the terminal. The user is asked to key in his identification code via an instruction window in the terminal 2. The code keyed in is transmitted by the terminal to the smart card 1, which compares the code with an identification code (entered in its memory during initialization). If the identification codes keyed in and already stored in the smart card 1 agree with one another (this is checked by the control software of the smart card), the smart card is activated, that is to say the control software starts the protocol for making connection to the system 4. It is pointed out that there are also smart cards which themselves already have a keyboard and a display; if that type of smart card were used, the terminal 2 itself no longer requires to be provided with a keyboard and a display and the input/output can take place entirely via the control system of the smart card. If the card 1 falls into the hands of another and the latter wishes to attempt to make a connection to the system 4 using said card, he will attempt to guess the identification code. The control software of the card will compare the code keyed in with the identification code on the smart card a number of times, for example five times. If the fifth attempt is also unsuccessful, the 'log-in session' will not, as has been usual hitherto, be terminated (accompanied or unaccompanied by an error message on the instruction window), but the control software of the smart card will pretend that a start is being made on setting up a session with the processing system 4, by means of a message such as "Please wait a moment" generated by the smart card 1 and displayed on the instruction window, possibly followed by further messages such as "Welcome to ....", which suggest that the user is connected to the processing system. These messages may be generated by the smart card 1 or, at a certain instant, by the processing system 4. After said five unsuccessful attempts at access, the processing system 4 has therefore received a report of misuse of the card 1. For this purpose, after the fifth unsuccessful attempt, the terminal 2 has received an error code from the card 1 and the terminal 2 sends, in turn, an alarm code to the processing system 4. The alarm code comprises either a terminal number or an indication of the location at which the terminal is situated; the latter option is preferable. The measures which are taken after the receipt of the alarm code may depend on the nature and extent of the smart-card system 1 to 4 inclusive. In any case, the measures will serve to achieve the result that misusers, who can be located by the measures described above, can be punished. If misuse is ascertained, warning the owner of the smart card, a monitoring service or the police may be considered. It is also possible, after misuse has been ascertained, to provide for the smart card to be put out of operation, for example by causing the processing system 4 to erase all the data on the smart card or by causing the smart card 1 to be 'swallowed' by the terminal 2, that is to say no longer returned to the user.

Finally, a simple example is given below of a program which may form a component of the control software of the smart card and in which the user is given the opportunity to key in his password five times. If an incorrect password is given five times consecutively, the program acts towards the user as if logging-in to the system 4 is actually taking place. In reality, logging-in is not taking place but an alarm message, including the location of the terminal, is in fact being transmitted.
100 REM "LOGIN.SMC", a
110 OPEN "pw$.FIL" FOR INPUT AS#1
120 OPEN "SYS.FIL" FOR OUTPUT AS#2
130 OPEN "MES.FIL" FOR INPUT AS#3
140 INPUT#1 UN$, PW$(1)
150 N=N+1
160 CLS:PRINT "PLEASE GIVE YOUR PASSWORD:";:LINE INPUT PW$(2)
170 IF PW$(2)=PW$(1) GOTO 290: REM LOGIN
180 IF N=5 GOTO 200: REM ALARM AND SIMULATION AFTER 5 LOGINS
190 GOTO 150
200 PRINT#2, USING "ALARM - TERMINAL LOCATION 12345 - UNAUTHORIZED
USE OF SMART CARD - USERNAME=&";UN$
210 CLS:PRINT "* JUST A MOMENT PLEASE *";
220 Q=Q+1: 1F Q<25 THEN FOR P=1 TO 5000:
NEXT P:
PRINT "*";:GOTO 220
225 Q=O
230 CLS:PRINT "*WELCOME TO ABCD SERV ICES*"
240 FOR T=1 TO 50000!: NEXT T
250 IF EOF(3) GOTO 210
260 INPUT#3,L$
265 CLS:PRINT L$
270 FOR T=1 TO 20000: NEXT T
280 GOTO 250
290 RUN "LOGIN"

## Claims

1. Method for protecting a smart-card system comprising a smart card and a terminal for connecting said smart-card to a processing system via a transmission medium, in which method, to activate the smart card, a smart card user has to key in an identification code which is compared by the smart card with an identification code stored in said smart card and in which method the smart card is activated if there is agreement between the two said identification codes, **characterized in that**, after an identification code which differs from the identification code stored in the smart card has been keyed in a certain number of times, the smart card is nevertheless activated to a limited extent, pretending that a start has been made on setting up a session by means of a message which suggests that the user is connected to the processing system, the message being generated by the smart card and, under these circumstances, an error code is supplied by the smart card to the terminal.

2. Method according to Claim 1, **characterized in that**, after detecting said error code, the terminal sends an alarm code to the processing system.

3. Method according to Claim 2, **characterized in that** said alarm code comprises an indication of the location of said terminal.

## Patentansprüche

1. Verfahren zum Schützen eines Chip-Kartensystems, das eine Chip-Karte und ein Terminal aufweist, um diese Chip-Karte über ein Übertragungsmedium mit einem Verarbeitungssystem zu verbinden, bei welchem Verfahren ein Benutzer der Chip-Karte zum Aktivieren der Chip-Karte einen Identifikationscode einrasten muss, der von der Chip-Karte mit einem in dieser Chip-Karte gespeicherten Identifikationscode verglichen wird, und bei welchem Verfahren die Chip-Karte aktiviert wird, wenn Übereinstimmung zwischen diesen zwei Identifikationscodes besteht, **dadurch gekennzeichnet, dass**, nachdem ein Identifikationscode, der sich von dem in der Chip-Karte gespeicherten Identifikationscode unterscheidet, eine bestimmte Anzahl Male eingetastet worden ist, die Chip-Karte trotzdem in beschränktem Ausmass aktiviert wird, das mittels einer Meldung, die andeutet, dass der Benutzer mit dem Verarbeitungssystem verbunden ist, wobei die Meldung von der Chip-Karte erzeugt wird, den Anschein erweckt, dass begonnen wurde eine Sitzung aufzubauen, und dass unter diesen Umständen von der Chip-Karte ein Fehlercode an den Terminal geliefert wird.

2. Verfahren nach Anspruch 1, **dadurch gekennzeichnet, dass** das Terminal nach dem Feststellen dieses Fehlercodes einen Alarmcode an das Verarbeitungssystem sendet.

3. Verfahren nach Anspruch 2, **dadurch gekennzeichnet, dass** dieser Alarmcode eine Anzeige des Standorts dieses Terminals umfasst.

## Revendications

1. Procédé de protection d'un système à carte intelligente comprenant une carte intelligente et un terminal pour connecter ladite carte intelligente à un système de traitement par l'intermédiaire d'un moyen de transmission, dans lequel procédé, pour activer la carte intelligente, l'utilisateur de carte intelligente doit entrer au clavier un code d'identification qui est comparé par la carte intelligente avec un code d'identification mémorisé dans ladite carte intelligente et dans lequel procédé la carte intelligente est activée s'il y a concordance entre les deux dits codes d'identification, **caractérisé en ce que**, après que l'on a entré au clavier un certain nombre de fois un code d'identification qui diffère du code d'identification mémorisé dans la carte intelligente, la carte intelligente est néanmoins activée dans une mesure limitée, en prétextant qu'un démarrage a été fait à l'ouverture d'une session au moyen d'un message qui suggère que l'utilisateur est connecté au système de traitement, le message étant engendré par la carte intelligente et, dans ces conditions, la carte intelligente délivre un code d'erreur au terminal.

2. Procédé selon la revendication 1, **caractérisé en ce que**, après détection dudit code d'erreur, le terminal envoie un code d'alarme au système de traitement.

3. Procédé selon la revendication 2, **caractérisé en ce que** ledit code d'alarme comprend une indication de la localisation dudit terminal.
